# EUROPEAN PATENT SPECIFICATION

(11) **EP 4 322 257 B1**
(45) Date of publication and mention of the grant of the patent: **17.09.2025**
(21) Application number: 21941746.6
(22) Date of filing: 24.12.2021
(51) Int. Cl.: C01G 53/50, H01M 4/525, H01M 4/505

(54) **COBALT-FREE POSITIVE ELECTRODE MATERIAL, PREPARATION METHOD THEREFOR, AND APPLICATION THEREOF**
KOBALTFREIES POSITIVELEKTRODENMATERIAL, HERSTELLUNGSVERFAHREN DAFÜR UND ANWENDUNG DAVON
MATÉRIAU D'ÉLECTRODE POSITIVE EXEMPT DE COBALT, SON PROCÉDÉ DE PRÉPARATION ET SON APPLICATION

(30) Priority: 08.05.2021 CN 202110500241
(43) Date of publication of application: 14.02.2024
(73) Proprietor: SVOLT Energy Technology Co., Ltd., Changzhou, Jiangsu 213200 (CN)
(72) Inventor: SHI, Zetao, hangzhou, Jiangsu 213200 (CN); QIAO, Qiqi, hangzhou, Jiangsu 213200 (CN); LI, Zitan, hangzhou, Jiangsu 213200 (CN); WANG, Pengfei, hangzhou, Jiangsu 213200 (CN); GUO, Feng, hangzhou, Jiangsu 213200 (CN); XU, Xinpei, hangzhou, Jiangsu 213200 (CN); YANG, Hongxin, hangzhou, Jiangsu 213200 (CN)
(74) Representative: Groth & Co. KB
(86) International application number: PCT/CN2021/141272
(87) International publication number: WO 2022/237184

(56) References cited:
- WO-A1-2015/004705
- CN-A- 103 199 238
- CN-A- 105 529 457
- CN-A- 112 133 917
- CN-A- 112 909 242

## Description

### TECHNICAL FIELD

The present disclosure belongs to the technical field of lithium-ion batteries and relates to a cobalt-free positive electrode material, a preparation method therefor and an application thereof.

### BACKGROUND

With continuous deterioration of the environment and increasing deficiency of fossil fuel, people have increasing needs for clean, portable energy. A lithium-ion secondary battery is widely applied to batteries of 3C devices such as a mobile phone, a computer and a camera because of its advantages of being non-pollution, large in energy storage and portable. As the technology develops, a lithium-ion battery with a high energy density is increasingly widely applied to a hybrid electrical vehicle, or even a battery electrical vehicle, which provides power for people to travel.

A lithium nickel-manganese-cobalt oxide ternary positive electrode material has advantages of being large in energy density, good in cycle performance, safe, environmentally friendly and the like and is an important direction of research on a battery positive electrode material at present. However, a cobalt resource is less in storage, so cobalt is high in price, meanwhile, the cobalt price is prone to being controlled, and cobalt pollution to the environment is high. Therefore, development of a cobalt-free lithium nickel-manganese oxide material has huge advantages in terms of controlling cost and enhancing market tolerance, but due to lack of cobalt, a cobalt-free binary positive electrode material is usually poor in cycle stability. In order to improve cycle stability of the material and meanwhile reduce a gas producing risk in a material cycling process, synthesizing a cobalt-free single-crystal material becomes a promising solution.

In the prior art, the cobalt-free positive electrode material is usually sintered directly by being mixed with a hydroxide precursor and lithium carbonate, a particle size of a material obtained through sintering is small, and mono-like or single crystal synthesis is difficult. Though a material with a large particle size may be obtained through sintering by regulating a reaction parameter, particle uniformity is poor and meanwhile capacity is low. CN 112 133 917 A proposes a method to prepare a Co-free positive electrode material comprising mixing a Co-free precursor with manganese dioxide and nickel hydroxide, spray-drying, mixing the spray-dried material with lithium hydroxide, and sintering. A coating step with SrO and TiO₂ is then performed.

How to obtain a positive electrode material of which particle sizes are uniformly distributed and the cycle performance and capacity are improved is an urgent technical problem to be solved.

### SUMMARY OF THE INVENTION

A preparation method for a cobalt-free positive electrode material is provided in the present invention as defined in appended claim 1.

In an embodiment provided in the present disclosure, a nickel-manganese hydroxide precursor and a nickel-manganese oxide precursor match for use, mixed sintering is performed by mixing two types of nickel-manganese precursors, increasing of a particle size of a hydroxide precursor synthesized material is facilitated by means of a characteristic of a large particle size of an oxide precursor synthesized material, meanwhile, defects that particles of a metal oxide synthesized positive electrode material are large and non-uniformly distributed are properly inhibited by means of good uniformity and small particles of the hydroxide precursor synthesized positive electrode material, the cobalt-free positive electrode material finally obtained under a synergetic effect of the two types of precursors is uniform in distribution of particle sizes and stable in structure, the cobalt-free positive electrode material with a proper particle size reduces a problem of poor cycle stability caused by excessively small primary particles and meanwhile may be higher in capacity than that of a positive electrode with an excessively large particle size, electrochemical performance of a battery is effectively improved, and the electrochemical performance includes the cycle performance and the capacity.

"A molar ratio of the nickel source to the manganese source keeps consistent with a molar ratio of a nickel element to a manganese element in the cobalt-free precursor" means that a molar ratio of a nickel element in the nickel source to a manganese element in the manganese source is x/y.

The cobalt-free positive electrode material obtained in an embodiment of the present disclosure is a mono-like or single-crystal material.

In the present invention, in the matrix material in the step (1), a molar ratio of Li to Me ranges from 1.05 to 1.15, for example, 1.05, 1.1, 1.15 or the like, and Me is a sum of a manganese element and a nickel element in the matrix material.

In an embodiment, based on a sum of molar weights of the cobalt-free precursor, the nickel source and the manganese source in the step (1) being 100%, total molar weights of the nickel source and the manganese source is 10% to 30%, for example, 10%, 15%, 20%, 25%, 30% or the like. Less total molar weights of the nickel source and the manganese source may cause difficult growth of single-crystal or mono-like primary particles; and excessively large total molar weights of the nickel source and the manganese source may cause a problem of excessively large particles of a material obtained through sintering, and excessively large or excessively small particles of the material may cause adverse influence on electrical performance of the material.

In an embodiment, the lithium source includes lithium carbonate and/or lithium hydroxide.

In an embodiment, the lithium source has a median particle size of 8 µm or less, for example, 8 µm, 7 µm, 6 µm, 5 µm, 4 µm, 3 µm or the like; the cobalt-free precursor has a median particle size ranging from 1.5 µm to 6 µm, for example, 1.2 µm, 2 µm, 3 µm, 4 µm, 5 µm, 6 µm or the like; the nickel source has a median particle size ranging from 3 µm to 8 µm, for example, 3 µm, 4 µm, 5 µm, 6 µm, 7 µm, 8 µm or the like; and the manganese source has a median particle size ranging from 3 µm to 8 µm, for example, 3 µm, 4 µm, 5 µm, 6 µm, 7 µm, 8 µm or the like.

In the present disclosure, match of particle sizes between raw materials is important, and a positive electrode material with an appropriate particle size may be obtained through sintering at an appropriate temperature through match of the particle sizes between the various raw materials.

In an embodiment of the present invention, the mixing in the step (1) includes:
(a) dividing the lithium source into a first lithium source and a second lithium source;
(b) mixing the first lithium source with the cobalt-free precursor in a molar ratio of Li to Me ranging from 1.05 to 1.15 to obtain a first matrix material; and
(c) mixing the second lithium source, the nickel source and the manganese source in a molar ratio of Li to Me ranging from 1.05 to 1.15 to obtain a second matrix material; and
(d) mixing the first matrix material and the second matrix material to obtain the matrix material.

The first lithium source and the second lithium source may be the same type or different types, which may be selected by those skilled in the art according to demands.

It needs to be noted that the step (b) and the step (c) are in no particular order of preparation.

Mixing uniformity is better in a stepwise mixing mode, and meanwhile a mixing efficiency is higher.

In an embodiment, the primary sintering in the step (2) is performed in an air atmosphere at a temperature ranging from 950°C to 1050°C, for example, 950°C, 970°C, 980°C, 990°C, 1000°C, 1010°C, 1020°C, 1030°C, 1040°C, 1050°C or the like for 8 h to 20 h, for example, 8 h, 10 h, 12 h, 15 h, 18 h, 20 h or the like.

In an embodiment, an air feeding flow of the air atmosphere is 5 L/min to 10 L/min, for example, 5 L/min, 6 L/min, 7 L/min, 8 L/min, 9 L/min, 10 L/min or the like.

In an embodiment, a temperature rise rate and a temperature reduction rate of the primary sintering in the step (2) are each 3°C/min to 5°C/min independently, for example, 3°C/min, 4°C/min, 5°C/min or the like.

In an embodiment, a coating material of the secondary coating and sintering in the step (2) includes any one or a combinatipn of at least two of TiO₂, Al₂O₃, WO₃ and H₃BO₃.

In an embodiment, the secondary coating and sintering in the step (2) is performed at a temperature ranging from 300°C to 800°C, for example, 300°C, 400°C, 500°C, 600°C, 700°C, 800°C or the like for 4 h to 7 h, for example, 4 h, 5 h, 6 h, 7 h or the like.

In an embodiment, a temperature rise rate of the secondary coating and sintering in the step (2) is 1°C/min to 3°C/min, for example, 1°C/min, 2°C/min, 3°C/min or the like.

A cobalt-free positive electrode material is provided in an embodiment of the present disclosure and is prepared by the above preparation method for the cobalt-free positive electrode material (outside the scope of the present claims).

A chemical formula of the cobalt-free positive electrode material is LiₘNiₓMn_{y}O₂, where, m>1, and m is, for example, 1.02, 1.03, 1.05, 1.08, 1.1, 1.12, 1.15 or the like; 0.4≤x≤0.75, and x is, for example, 0.4, 0.5, 0.55, 0.6, 0.65, 0.7, 0.75 or the like; and 0.25≤y≤0.6, y is, for example, 0.25, 0.3, 0.35, 0.4, 0.5, 0.6 or the like, and x+y=1.

In an embodiment of the present disclosure, the particle sizes of particles of the obtained cobalt-free positive electrode material are distributed uniformly, a structure is stable, a mono-like or single-crystal structure may be obtained, cycle performance of a battery is finally improved, and the capacity is also increased.

In an embodiment, in LiₘNiₓMn_{y}O₂, 1.05≤m≤1.15, for example, 1.05, 1.1, 1.15 or the like.

In an embodiment, the cobalt-free positive electrode material has a median particle size ranging from 2 µm to 5 µm, for example, 2 µm, 3 µm, 4 µm, 5 µm or the like.

In an embodiment of the present disclosure, the capacity and the cycle performance of the battery are better ensured within the above range of the median particle size of the cobalt-free positive electrode material.

In an embodiment, a specific surface area of the cobalt-free positive electrode material is 0.3 m²/g to 1.5 m²/g, for example, 0.3 m²/g, 0.5m²/g, 0.8m²/g, 1m²/g, 1.2m²/g, 1.5m²/g or the like.

In an embodiment, pH of the cobalt-free positive electrode material is smaller than or equal to 11.8, for example, 11.8, 11.5, 11, 10.5, 10, or the like.

In an embodiment, total alkali in the cobalt-free positive electrode material is smaller than or equal to 3500 ppm, for example, 3500 ppm, 3300 ppm, 3000 ppm, 2800 ppm, 2500 ppm or the like.

A lithium-ion battery is provided in an embodiment of the present disclosure and includes the above cobalt-free positive electrode material (outside the scope of the present claims).

In an embodiment of the present disclosure, in a process of preparing the cobalt-free positive electrode material, a nickel-manganese hydroxide precursor and a nickel-manganese oxide precursor match for use, mixed sintering is performed by mixing two types of precursors, increasing of the particle size of a hydroxide precursor synthesized material is achieved by means of a characteristic of a large particle size of an oxide precursor synthesized material, meanwhile, meanwhile, defects that particles of the metal oxide synthesized positive electrode material are large and non-uniformly distributed are properly inhibited by means of good uniformity and small particles of the hydroxide precursor synthesized positive electrode material, the cobalt-free positive electrode material finally obtained under a synergetic effect of the two types of precursors is uniform in distribution of particle sizes and stable in structure, the cycle performance and the capacity of the battery are effectively improved and are ensured at the same time, and the battery may reach 87.4% or above under 0.1C in first efficiency, 135.4 mAh/g or above in discharge capacity under 1C and 97.1% or above under 1C in cycle performance.

### BRIEF DESCRIPTION OF THE DRAWINGS

Accompanying drawings are for providing further understanding of the technical solutions of the present disclosure, constitute a part of the specification and together with the embodiments of this application, serve to explain the technical solutions of the present disclosure without constituting the limitation on the technical solutions of the present disclosure.
Fig. 1 and Fig. 2 are SEM diagrams of a cobalt-free positive electrode material in different multiple ratios prepared according to the present invention.
Fig. 3 and Fig. 4 are SEM diagrams of a cobalt-free positive electrode material in different multiple ratios prepared by comparative example 1.
Fig. 5 and Fig. 6 are SEM diagrams of a cobalt-free positive electrode material in different multiple ratios prepared by comparative example 2.

### DETAILED DESCRIPTION

The technical solutions of the present disclosure are further described below with reference to the accompanying drawings and through specific implementations. Those skilled in the art should understand that the embodiments are only intended to help understand the present disclosure but not to be regarded as a specific limitation on the present disclosure, the scope of protection being defined by the appended claims.

### Example 1

This example provides a cobalt-free positive electrode material. A chemical formula of the positive electrode material is Li_{1.1}Ni_{0.55}Mn_{0.45}O₂.

A preparation method for the cobalt-free positive electrode material is as follows.

Median particle sizes of various raw materials are as follows.

Lithium carbonate has a median particle size of 5 µm, Ni_{0.55}Mn_{0.45}(OH)₂ has a median particle size of 2.5 µm, nickel oxide has a median particle size of 5 µm, and trimanganese tetraoxide has a median particle size of 5 µm.
(1) the lithium carbonate and Ni_{0.55}Mn_{0.45}(OH)₂ are mixed in a molar ratio of Li to Me being 1.1 to obtain a first matrix material.
   The lithium carbonate, the nickel oxide and the trimanganese tetraoxide are mixed in a molar ratio of Li to Me being 1.1 in a case that a molar ratio of a nickel source to a manganese source keeps consistent with Ni_{0.55}Mn_{0.45}(OH)₂ to obtain a second matrix material.
(2) Secondary mixing is performed on the first matrix material and the second matrix material to obtain a matrix material, wherein total molar weights of the nickel oxide and the trimanganese tetraoxide are 10% of total molar weights of nickel and manganese in the matrix material.
(3) The matrix material in the step (2) is heated to 1000°C at a temperature rise rate of 5°C/min under an air atmosphere, subjected to primary sintering for 12 h and then cooled to a room temperature at a temperature reduction rate of 5°C/min, a substance obtained after sintering is crushed by means of a crushing device, and an obtained powder material is sieved with a 400-mesh sieve mesh to obtain an uncoated material.
   An air feeding flow of the air atmosphere is 5 L/min.
(4) The uncoated material in the step (3) is coated with TiO₂, heated to 300°C in a box-type atmosphere furnace at a temperature rise rate of 3°C/min and subjected to coating and sintering for 7 h to obtain the cobalt-free positive electrode material.

### Example 2

This example provides a cobalt-free positive electrode material. A chemical formula of the positive electrode material is Li_{1.15}Ni_{0.4}Mn_{0.6}O₂.

A preparation method for the cobalt-free positive electrode material is as follows.

Median particle sizes of various raw materials are as follows.

Lithium hydroxide has a median particle size of 6 µm, Ni_{0.4}Mn_{0.6}(OH)₂ has a median particle size of 3 µm, nickel oxide has a median particle size of 5 µm, and manganese oxide has a median particle size of 5 µm.
(1) The lithium hydroxide and Ni_{0.4}Mn_{0.6}(OH)₂ are mixed in a molar ratio of Li to Me being 1.15 to obtain a first matrix material.
   The lithium hydroxide, the nickel oxide and the manganese oxide are mixed in a molar ratio of Li to Me being 1.15 in a case that a molar ratio of a nickel source to a manganese source keeps consistent with Ni_{0.4}Mn_{0.6}(OH)₂ to obtain a second matrix material.
(2) Secondary mixing is performed on the first matrix material and the second matrix material to obtain a matrix material, wherein total molar weights of the nickel oxide and the manganese oxide are 20%.
(3) The matrix material in the step (2) is heated to 1050°C at a temperature rise rate of 3°C/min under an air atmosphere, subjected to primary sintering for 15 h and then cooled to a room temperature at a temperature reduction rate of 3°C/min, a substance obtained after sintering is crushed by means of a crushing device, and an obtained powder material is sieved with a 400-mesh sieve mesh to obtain an uncoated material.
   An air feeding flow of the air atmosphere is 10 L/min.
(4) The uncoated material in the step (3) is coated with Al₂O₃, heated to 800°C in a box-type atmosphere furnace at a temperature rise rate of 1°C/min and subjected to coating and sintering for 4 h to obtain the cobalt-free positive electrode material.

### Example 3

This example provides a cobalt-free positive electrode material. A chemical formula of the positive electrode material is Li_{1.05}Ni_{0.75}Mn_{0.25}O₂.

A preparation method for the cobalt-free positive electrode material is as follows.

Median particle sizes of various raw materials are as follows.

Lithium hydroxide has a median particle size of 5 µm, lithium carbonate has a median particle size of 6 µm, Ni_{0.75}Mn_{0.25}(OH)₂ has a median particle size of 2.5 µm, nickel oxide has a median particle size of 4 µm, and manganese oxide has a median particle size of 4 µm.
(1) The lithium carbonate and Ni_{0.75}Mn_{0.25}(OH)₂ are mixed in a molar ratio of Li to Me being 1.05 to obtain a first matrix material.
   The lithium hydroxide, the nickel oxide and manganese dioxide are mixed in a molar ratio of Li to Me being 1.05 in a case that a molar ratio of a nickel source to a manganese source keeps consistent with Ni_{0.75}Mn_{0.25}(OH)₂ to obtain a second matrix material.
(2) Secondary mixing is performed on the first matrix material and the second matrix material to obtain a matrix material, wherein total molar weights of the nickel oxide and the manganese dioxide are 30%.
(3) The matrix material in the step (1) is heated to 950°C at a temperature rise rate of 4°C/min under an air atmosphere, subjected to primary sintering for 10 h and then cooled to a room temperature at a temperature reduction rate of 4°C/min, a substance obtained after sintering is crushed by means of a crushing device, and an obtained powder material is sieved with a 400-mesh sieve mesh to obtain an uncoated material.
   An air feeding flow of the air atmosphere is 8 L/min.
(4) The uncoated material in the step (3) is coated with WO₃, heated to 500°C in a box-type atmosphere furnace at a temperature rise rate of 2°C/min and subjected to coating and sintering for 5 h to obtain the cobalt-free positive electrode material.

### Example 4

A difference between this example and Example 1 lies in that this example directly mixes lithium carbonate, Ni_{0.55}Mn_{0.45}(OH)₂, nickel oxide and trimanganese tetraoxide in a molar ratio of Li to Me being 1.1.

Other steps of a preparation method and other parameters keep consistent with Example 1.

### Example 5

A difference between this example and Example 1 lies in that in the step (2) of this example, a sum of molar weights of a nickel source and a manganese source accounts for 40% of a sum of molar weights of raw materials except a lithium source.

Other steps of a preparation method and other parameters keep consistent with Example 1.

### Comparative Example 1

A difference between this comparative example and Example 1 lies in that a preparation method for a matrix material in this comparative example is:
the lithium carbonate and Ni_{0.55}Mn_{0.45}(OH)₂ are mixed in a molar ratio of Li to Me being 1.1 to obtain a matrix material, namely, nickel oxide and trimanganese tetraoxide are not added.

Other steps of a preparation method and other parameters keep consistent with Example 1.

### Comparative Example 2

A difference between this comparative example and Example 1 lies in that a preparation method for a matrix material in this comparative example is:
the lithium carbonate, the nickel oxide and the trimanganese tetraoxide are mixed in a molar ratio of Li to Me being 1.1 in a case that a molar ratio of Ni to Mn is 0.55:0.45 to obtain a matrix material, namely, Ni_{0.55}Mn_{0.45}(OH)₂ is not added.

Other steps of a preparation method and other parameters keep consistent with Example 1.

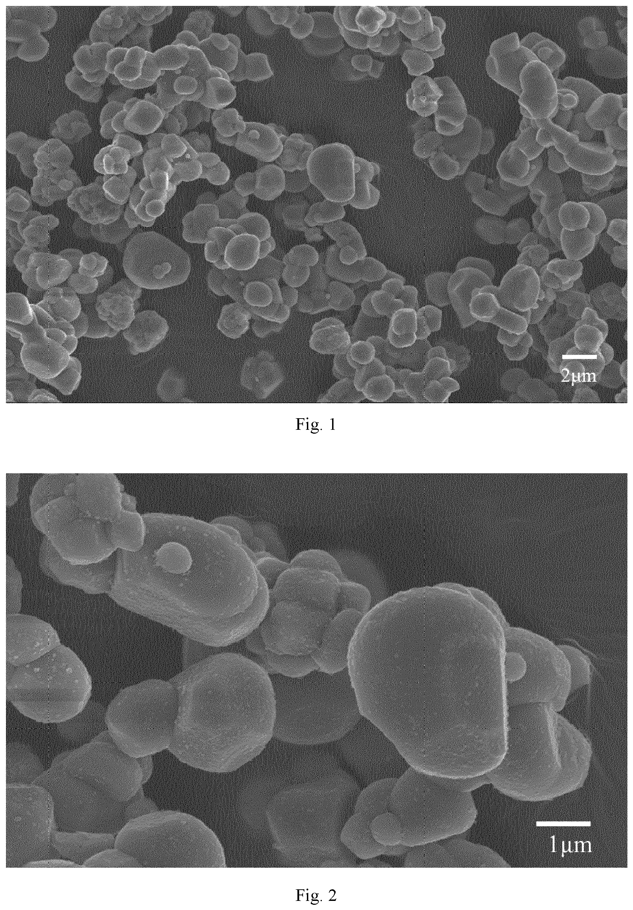

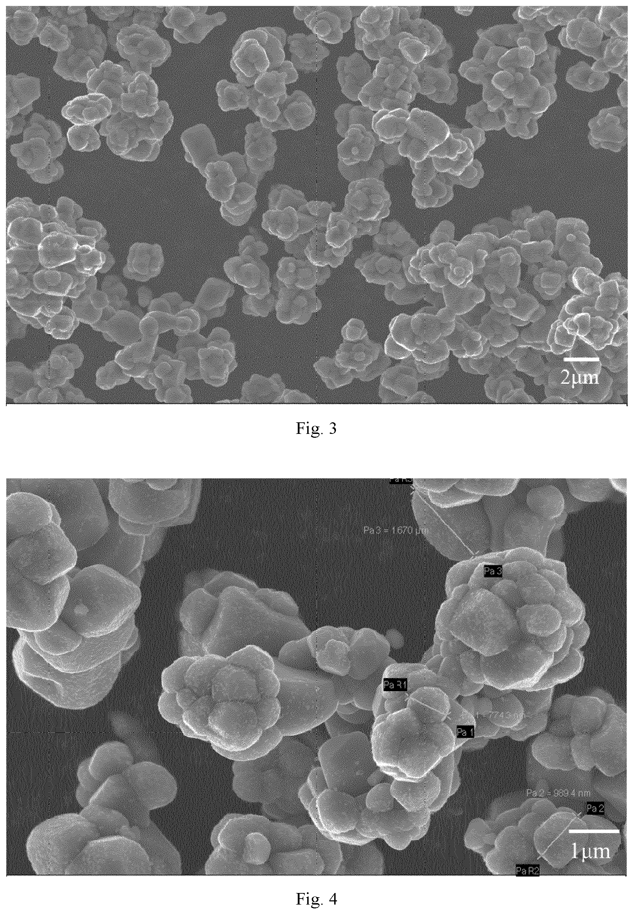

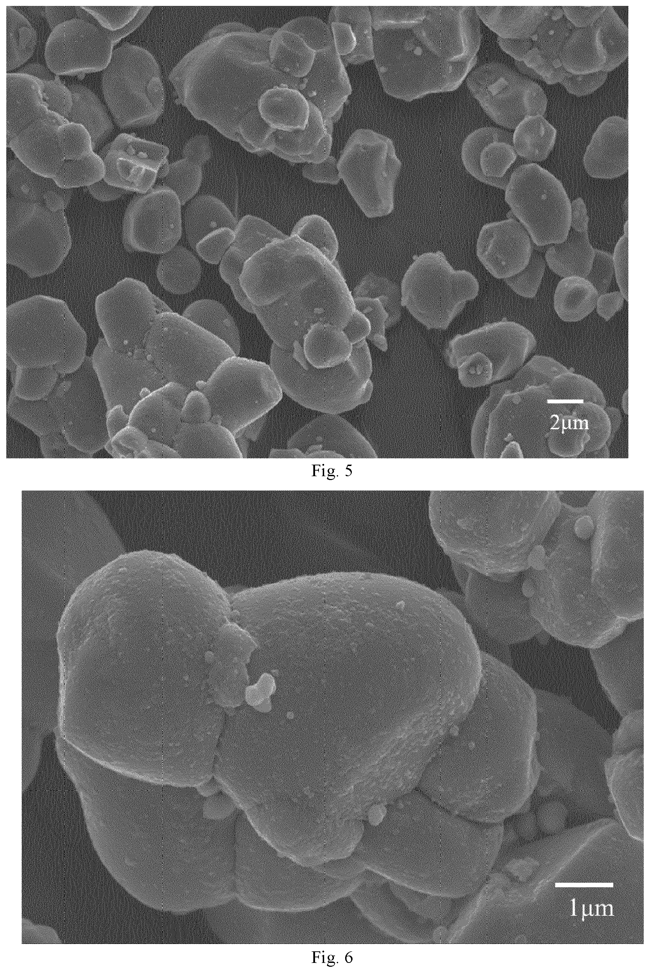

It may be seen from Fig. 1 and Fig. 2 that particle sizes of particles of the cobalt-free positive electrode material prepared by Example 1 are uniform. It may be seen from Fig. 3 and Fig. 4 that a particle size of a cobalt-free positive electrode material prepared by comparative example 1 is small. It may be seen from Fig. 5 and Fig. 6 that a particle size of a cobalt-free positive electrode material prepared by comparative example 2 is large.

It may be seen from Fig. 1 to Fig. 6 that the cobalt-free positive electrode material prepared by the preparation method provided by the present disclosure is uniform in particle distribution and moderate in particle size.

Median particle size, specific surface area, pH and total alkali amount of the cobalt-free positive electrode materials provided by Examples 1 to 5 and comparative examples 1 to 2 are shown in Table 1.

**Table 1**

| | Median particle size (µm) | Specific surface area (m²/g) | pH | **Total alkali (ppm)** |
|---|---|---|---|---|
| Example 1 | 2.5 | 0.7 | 11.6 | 2600 |
| Example 2 | 2.2 | 0.8 | 11.5 | 2400 |
| Example 3 | 3.0 | 0.6 | 11.6 | 2800 |
| Example 4 | 2.6 | 0.7 | 11.5 | 2700 |
| Example 5 | 3.0 | 0.6 | 11.7 | 2600 |
| Comparative Example 1 | 1 | 0.9 | 11.6 | 2700 |
| Comparative Example 2 | 5.5 | 0.4 | 11.6 | 2600 |

The positive electrode material provided by Examples 1 to 5 and Comparative Examples 1 to 2 is mixed with conductive carbon black (SP) polyvinylidene fluoride in a mass ratio of 92:4:4 to obtain a CR2032 button battery through preparation, and an electrochemical performance test is performed with a test voltage being 3.0 V to 4.4 V. A result is shown in Table 2

**Table 2**

| | 0.1C charge capacity /mAh/g | 0.1C discharge /mAh/g | First efficiency (%) | 1C discharge capacity/mAh/g | 50-cycle capacity retention ratio under 1C (%) |
|---|---|---|---|---|---|
| Example 1 | 192.4 | 172.2 | 89.5 | 156.3 | 98.3 |
| Example 2 | 178.2 | 157.1 | 88.2 | 135.4 | 99.1 |
| Example 3 | 221.4 | 194.8 | 87.9 | 171.3 | 97.1 |
| Example 4 | 191.2 | 170.3 | 89.1 | 154.2 | 98.1 |
| Example 5 | 182.2 | 159.3 | 87.4 | 140.4 | 97.9 |
| Comparative Example 1 | 192.1 | 173.2 | 90.2 | 157.3 | 90.2 |
| Comparative Example 2 | 176.2 | 153.3 | 87.5 | 139.2 | 94.3 |

It may be seen from data results of Example 1 and Example 4 that in a process of preparing the matrix material, electrical performance obtained after stepwise mixing is slightly better than electrical performance obtained after one-step mixing.

It may be seen from data results of Example 1 and Example 5 that too large sum of molar weights of the nickel-manganese oxides causes too large particles and remarkable reduction of the capacity.

It may be seen from data results of Example 1 and comparative example 1 that the cycle performance is poor if the cobalt-free positive electrode material is prepared only with nickel-manganese hydroxides.

It may be seen from data results of Example 1 and comparative example 2 that preparing the cobalt-free positive electrode material only with nickel-manganese oxides is not beneficial to playing of the capacity.

To sum up, in the present disclosure, in a process of preparing the cobalt-free positive electrode material, a nickel-manganese hydroxide precursor and a nickel-manganese oxide precursor match for use, mixed sintering is performed by mixing two types of precursors, increasing of the particle size of a hydroxide precursor synthesized material is achieved by means of a characteristic of a large particle size of an oxide precursor synthesized material, meanwhile, defects that particles of the metal oxide synthesized positive electrode material are large and non-uniformly distributed are properly inhibited by means of good uniformity and small particles of the hydroxide precursor synthesized positive electrode material, the cobalt-free positive electrode material finally obtained under a synergetic effect of the two types of precursors is uniform in distribution of particle sizes and stable in structure, the cycle performance and the capacity of the battery are ensured at the same time, and the battery may reach 87.4% or above under 0.1C in first efficiency, 135.4 mAh/g or above in discharge capacity under 1C and 97.1% or above under 1C in cycle performance.

## Claims

1. A method for preparing a cobalt-free positive electrode material, comprising the following steps:
(1) mixing a lithium source, a cobalt-free precursor, a nickel source and a manganese source to obtain a matrix material, or,
the mixing of step (1) comprises:
(a) dividing the lithium source into a first lithium source and a second lithium source;
(b) mixing the first lithium source with the cobalt-free precursor in a molar ratio of Li to Me ranging from 1.05 to 1.15 to obtain a first matrix material;
(c) mixing the second lithium source, the nickel source and the manganese source in a molar ratio of Li to Me ranging from 1.05 to 1.15 to obtain a second matrix material; and
(d) mixing the first matrix material and the second matrix material to obtain the matrix material; and
(2) performing a primary sintering and a secondary coating and sintering on the matrix material in the step (1) to obtain the cobalt-free positive electrode material,
wherein a chemical formula of the cobalt-free precursor is NiₓMn_{y}(OH)₂, 0.4≤x≤0.75, 0.25≤y≤0.6, the nickel source comprises nickel oxide, the manganese source comprises any one or a combination of at least two of manganese dioxide, trimanganese tetraoxide and manganese oxide, and a molar ratio of the nickel source to the manganese source keeps consistent with a molar ratio of a nickel element to a manganese element in the cobalt-free precursor wherein in the matrix material in the step (1), a molar ratio of Li to Me ranges from 1.05 to 1.15, and Me is a sum of a manganese element and a nickel element in the matrix material.

2. The method for preparing a cobalt-free positive electrode material according to claim 1, wherein based on a sum of molar weights of the cobalt-free precursor, the nickel source and the manganese source in the step (1) being 100%, a total molar weights of the nickel source and the manganese source ranges from 10% to 30%.

3. The method for preparing a cobalt-free positive electrode material according to any one of claims 1 to 2, wherein the lithium source has a median particle size of 8 µm or less, the cobalt-free precursor has a median particle size ranging from 1.5 µm to 6 µm, the nickel source has a median particle size ranging from 3 µm to 8 µm, and the manganese source has a median particle size ranging from 3 µm to 8 µm.

4. The method for preparing a cobalt-free positive electrode material according to any one of claims 1 to 3, wherein the primary sintering in the step (2) is performed in an air atmosphere at a temperature ranging from 950°C to 1050°C for 8 h to 20 h.

5. The method for preparing a cobalt-free positive electrode material according to any one of claims 1 to 4, wherein a coating material of the secondary coating and sintering in the step (2) comprises any one or a combination of at least two of TiO₂, Al₂O₃, WO₃ and H₃BO₃.

6. The method for preparing a cobalt-free positive electrode material according to any one of claims 1 to 5, wherein the secondary coating and sintering in the step (2) is performed at a temperature ranging from 300°C to 800°C for 4 h to 7 h.

## Patentansprüche

1. Verfahren zur Herstellung eines kobaltfreien Positivelektrodenmaterials, umfassend die folgenden Schritte:
(1) Mischen einer Lithiumquelle, eines kobaltfreien Precursors, einer Nickelquelle und einer Manganquelle, um ein Matrixmaterial zu erhalten, oder,
das Mischen von Schritt (1) umfasst:
(a) Teilen der Lithiumquelle in eine erste Lithiumquelle und eine zweite Lithiumquelle;
(b) Mischen der ersten Lithiumquelle mit dem kobaltfreien Precursor in einem molaren Verhältnis von Li zu Me im Bereich von 1,05 bis 1,15, um ein erstes Matrixmaterial zu erhalten;
(c) Mischen der zweiten Lithiumquelle, der Nickelquelle und der Manganquelle in einem molaren Verhältnis von Li zu Me im Bereich von 1,05 bis 1,15, um ein zweites Matrixmaterial zu erhalten; und
(d) Mischen des ersten Matrixmaterials und des zweiten Matrixmaterials, um das Matrixmaterial zu erhalten; und
(2) Durchführen eines Primärsinterns und einer Sekundärbeschichtung und Sinterns an dem Matrixmaterial in Schritt (1), um das kobaltfreie Positivelektrodenmaterial zu erhalten,
wobei eine chemische Formel deskobaltfreien Precursors NiₓMn_{y}(OH)₂ ist, 0,4≤x≤0,75, 0, 25≤y≤0,6, die Nickelquelle Nickeloxid umfasst, die Manganquelle eine oder eine Kombination aus wenigstens zwei von Mangandioxid, Trimangan-tetraoxid und Manganoxid umfasst, und ein molares Verhältnis der Nickelquelle zur Manganquelle konsistent bleibt mit einem molaren Verhältnis eines Nickelelements zu einem Manganelement in dem kobaltfreien Precursor, wobei in dem Matrixmaterial in Schritt (1) ein molares Verhältnis von Li zu Me im Bereich von 1,05 bis 1,15 liegt, und Me eine Summe aus einem Manganelement und einem Nickelelement in dem Matrixmaterial ist.

2. Verfahren zur Herstellung eines kobaltfreien Positivelektrodenmaterials nach Anspruch 1, wobei basierend auf einer Summe der Molgewichte des kobaltfreien Precursors, der Nickelquelle und der Manganquelle in Schritt (1) von 100 %, die Gesamtmolgewichte der Nickelquelle und der Manganquelle im Bereich von 10 %-30 % liegen.

3. Verfahren zur Herstellung eines kobaltfreien Positivelektrodenmaterials nach einem der Ansprüche 1 oder 2, wobei die Lithiumquelle eine mittlere Partikelgröße von 8 µm oder weniger aufweist, der kobaltfreie Precursor eine mittlere Partikelgröße im Bereich von 1,5 µm-6 µm aufweist, die Nickelquelle eine mittlere Partikelgröße im Bereich von 3 µm-8 µm aufweist, und die Manganquelle eine mittlere Partikelgröße im Bereich von 3 µm-8 µm aufweist.

4. Verfahren zur Herstellung eines kobaltfreien Positivelektrodenmaterials nach einem der Ansprüche 1 bis 3, wobei das Primärsintern in Schritt (2) in Luftatmosphäre bei einer Temperatur im Bereich von 950°C-1050°C für 8 h-20 h durchgeführt wird.

5. Verfahren zur Herstellung eines kobaltfreien Positivelektrodenmaterials nach einem der Ansprüche 1 bis 4, wobei ein Beschichtungsmaterial der Sekundärbeschichtung und des Sinterns in Schritt (2) eine oder eine Kombination von wenigstens zwei von TiO₂, Al₂O₃, WO₃ und H₃BO₃ umfasst.

6. Verfahren zur Herstellung eines kobaltfreien Positivelektrodenmaterials nach einem der Ansprüche 1 bis 5, wobei die Sekundärbeschichtung und das Sintern in Schritt (2) bei einer Temperatur im Bereich von 300°C-800°C für 4 h-7 h durchgeführt wird.

## Revendications

1. Procédé de préparation d'un matériau d'électrode positive exempt de cobalt, comprenant les étapes suivantes :
(1) le mélange d'une source de lithium, d'un précurseur exempt de cobalt, d'une source de nickel et d'une source de manganèse afin d'obtenir un matériau de matrice, ou,
le mélange de l'étape (1) comprend :
(a) la division de la source de lithium en une première source de lithium et une seconde source de lithium ;
(b) le mélange de la première source de lithium avec le précurseur exempt de cobalt dans un rapport molaire entre Li et Me compris entre 1,05 et 1,15 afin d'obtenir un premier matériau de matrice ;
(c) le mélange de la seconde source de lithium, de la source de nickel et de la source de manganèse dans un rapport molaire entre Li et Me compris entre 1,05 et 1,15 afin d'obtenir un second matériau de matrice ; et
(d) le mélange du premier matériau de matrice et du second matériau de matrice afin d'obtenir le matériau de matrice ; et
(2) la réalisation d'un frittage primaire et d'un revêtement et d'un frittage secondaire sur le matériau de matrice de l'étape (1) afin d'obtenir le matériau d'électrode positive exempt de cobalt,
dans lequel une formule chimique du précurseur exempt de cobalt est NiₓMn_{y}(OH)₂, 0,4 ≤ × ≤ 0,75, 0,25 ≤ y ≤ 0,6, la source de nickel comprend de l'oxyde de nickel, la source de manganèse comprend l'un quelconque ou une combinaison d'au moins deux éléments parmi le dioxyde de manganèse, le tétraoxyde de trimanganèse et l'oxyde de manganèse, et un rapport molaire entre la source de nickel et la source de manganèse reste cohérent avec un rapport molaire entre un élément nickel et un élément manganèse dans le précurseur exempt de cobalt dans lequel dans le matériau de matrice de l'étape (1), un rapport molaire entre Li et Me va de 1,05 à 1,15, et Me est une somme d'un élément manganèse et d'un élément nickel dans le matériau de matrice.

2. Procédé de préparation d'un matériau d'électrode positive exempt de cobalt selon la revendication 1, dans lequel, sur la base d'une somme des pondérations molaires du précurseur exempt de cobalt, de la source de nickel et de la source de manganèse de l'étape (1) étant de 100 %, les pondérations molaires totales de la source de nickel et de la source de manganèse sont comprises entre 10 % et 30 %.

3. Procédé de préparation d'un matériau d'électrode positive exempt de cobalt selon l'une quelconque des revendications 1 et 2, dans lequel la source de lithium a une taille de particule médiane de 8 µm ou moins, le précurseur exempt de cobalt a une taille de particule médiane comprise entre 1,5 µm et 6 µm, la source de nickel a une taille de particule médiane comprise entre 3 µm et 8 µm, et la source de manganèse a une taille de particule médiane comprise entre 3 µm et 8 µm.

4. Procédé de préparation d'un matériau d'électrode positive exempt de cobalt selon l'une quelconque des revendications 1 à 3, dans lequel le frittage primaire de l'étape (2) est réalisé dans une atmosphère d'air à une température comprise entre 950 °C et 1050 °C pendant 8 h à 20 h.

5. Procédé de préparation d'un matériau d'électrode positive exempt de cobalt selon l'une quelconque des revendications 1 à 4, dans lequel un matériau de revêtement du revêtement et du frittage secondaire de l'étape (2) comprend l'un quelconque ou une combinaison d'au moins deux parmi TiO₂, Al₂O₃, WO₃ et H₃BO₃.

6. Procédé de préparation d'un matériau d'électrode positive exempt de cobalt selon l'une quelconque des revendications 1 à 5, dans lequel le revêtement et le frittage secondaire de l'étape (2) sont réalisés à une température comprise entre 300 °C et 800 °C pendant 4 h à 7 h.
